# FASCICULE DE BREVET EUROPEEN

(11) **EP 0 515 262 B1**
(45) Date de publication et mention de la délivrance du brevet: **18.01.1995**
(21) Numéro de dépôt: 92401358.4
(22) Date de dépôt: 19.05.1992
(51) Int. Cl.: A01M 29/00, E04D 13/00

(54) **Dispositif de protection contre les oiseaux**
Vogelschutzvorrichtung
Bird protection device

(30) Priorité: 23.05.1991 FR 9106213
(43) Date de publication de la demande: 25.11.1992
(73) Titulaire: SORELEC, F-45500 Saint Jean de Braye (Loiret) (FR)
(72) Inventeur: DJELOUAH, Salah, F-45800 Saint Denis de l'Hôtel, (Loiret) (FR)
(74) Mandataire: Cabinet HERRBURGER

(56) Documents cités:
- EP-A- 0 230 736
- EP-A- 0 340 108
- US-A- 2 887 730
- US-A- 2 938 243
- US-A- 3 282 000

## Description

L'invention concerne un dispositif de protection contre les oiseaux, ce dispositif étant formé d'un support en forme de baguette et muni de pointes pour se fixer sur les emplacements susceptibles de servir de perchoirs.

Il est connu d'utiliser de tels dispositifs pour protéger les immeubles contre l'installation des pigeons ou certains éléments d'installations publiques de mobiliers urbains, pour éviter que les oiseaux ne les utilisent comme perchoirs et ne les souillent, voir EP-A-0 230 736. Ce problème est particulièrement grave dans le cas de panneaux solaires équipant des pylônes d'éclairage public car la transparence du panneau est indispensable pour que le panneau solaire puisse fonctionner correctement. Il est donc dans ce cas particulièrement important de protéger les panneaux solaires.

Il existe déjà une pièce en forme de peigne à dents qui se fixe sur le bord supérieur du panneau solaire (celui-ci est toujours incliné) pour éviter que ce bord supérieur ne soit utilisé comme perchoir.

Toutefois, les dispositifs connus actuellement ne permettent aucune adaptation aux différentes applications ; les panneaux peuvent avoir des dimensions très différentes suivant les installations qu'ils doivent alimenter ; la forme des panneaux ellemême peut être très variable, aussi, dans un certain nombre de cas, n'est-il pas possible d'utiliser les moyens connus.

Enfin, suivant la situation géographique, il est souhaitable de prévoir un écartement différent pour les aiguilles, de manière à réaliser à un optimum ; ainsi, les panneaux solaires utilisés par exemple pour des balises marines, et sur lesquels risquent de se percher des mouettes, devraient être munis de moyens de protection différents et surtout plus résistants que ceux destinés à écarter les pigeons dans les zones urbaines.

La présente invention a pour but de créer un dispositif de protection du type ci-dessus, qui soit d'une fabrication simple, susceptible d'être fait en grandes séries, qui permette une standardisation très poussée tout en autorisant une adaptation très grande aux différents besoins tant pour la répartition des aiguilles que la forme des emplacements qui doivent recevoir de tels dispositifs.

A cet effet, l'invention concerne un dispositif de protection caractérisé en ce que :
- le support est munie d'une rainure à section en T renversé, débouchant,
- les pointes sont des aiguilles munies d'une tête qui se positionne dans la rainure.

Le dispositif de protection selon l'invention peut être fabriqué en série, sous la forme d'éléments ayant une longueur déterminée. Cette fabrication peut se faire à la machine, d'abord par exemple par extrusion du support puis mise en place des pointes. Cela permet d'avoir une fabrication uniforme quelle que soit la longueur des éléments à protéger ; il suffira alors de couper ces dispositifs en forme de baguettes à la longueur voulue et de les fixer sur l'élément à protéger.

De manière particulièrement avantageuse, le support est en forme de cornière et la rainure se trouve au sommet de la cornière. En effet, il est indispensable de munir l'arête supérieure de l'élément à protéger contre les oiseaux car ceux-ci recherchent des positions en hauteur et ne peuvent se percher que sur l'arête supérieure. Cette forme de cornière, qu'elle soit de section à l'équerre ou d'une section différente par exemple arrondie, peut être adaptée parfaitement à la forme de l'élément à protéger ; si cet élément est anguleux, la section de la cornière sera adaptée à cette forme d'angle ; s'il s'agit d'une surface arrondie par exemple d'un tube, la cornière aura une section arrondie.

Suivant une autre caractéristique, le dispositif comporte un organe d'écartement et de maintien, en forme de cornière, muni d'une rangée de trous à l'écartement et aux dimensions de la tige des aiguilles et destiné à coiffer le support après la mise en place des aiguilles dans la rainure, cet organe d'écartement se fixant sur la cornière devant la rainure.

Cet organe d'écartement complète la retenue des pointes dans le support tout en maintenant leur écartement. Cet organe d'écartement peut être intéressant pour éviter que les pointes ne se déplacent dans le cas où le dispositif de protection équipe par exemple un élément soumis à des vibrations.

Il est également possible de fixer les pointes dans la rainure du support par des points de colle ou encore en remplissant la rainure d'un mastic ou d'une matière adhésive.

Suivant une autre caractéristique de l'invention, le support présente une certaine élasticité et les bords de la rainure sont normalement jointifs. Ces bords comportent des empreintes dont l'écartement correspond à l'écartement voulu pour les pointes. Pour la mise en place des pointes il suffit de pincer le support pour écarter les bords de l'empreinte et permettre de glisser les pointes à travers la rainure. En relâchant le support, sous l'effet de l'élasticité, les bords de la rainure se referment sur les pointes et maintiennent celles-ci à l'écartement.

La présente invention sera décrite ci-après de manière plus détaillée à l'aide de différents exemples de réalisation représentés schématiquement dans les dessins annexés dans lesquels :
- la figure 1 est une vue schématique d'un dispositif de protection fixé sur un panneau ou élément incliné.
- la figure 2 est une vue en perspective d'un premier mode de réalisation d'un dispositif de protection selon l'invention.
- la figure 3 est une vue en coupe du dispositif selon la figure 2.
- la figure 4 montre une variante du dispositif selon les figures 2 et 3.
- la figure 5 montre une autre variante du dispositif de protection.
- les figures 6 et 7 sont des vues de dessus simplifiées d'une autre variante du dispositif de protection selon l'invention, la figure 6 correspondant à la forme finale et la figure 7 à la forme intermédiaire.
- les figures 8 et 9 montrent respectivement en coupe et en vue de dessus un autre mode de réalisation de l'invention.
- la figure 10 montre une autre variante du dispositif en vue en coupe.
- les figures 11A et 11B, 11C montrent les trois étapes de réalisation d'un dispositif de protection selon une autre variante de l'invention.

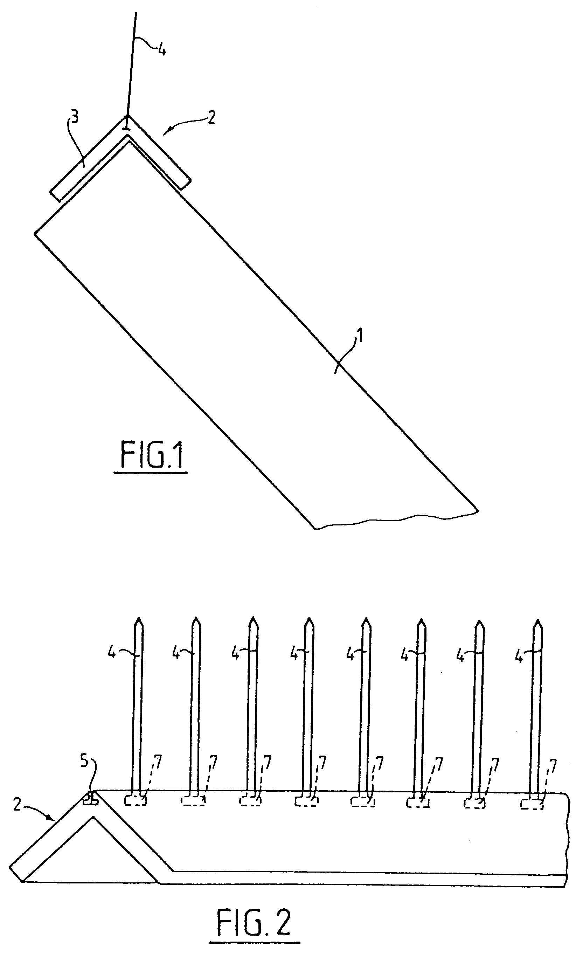

Selon la figure 1, l'invention concerne un dispositif de protection contre les oiseaux destiné à éviter que les oiseaux ne se perchent sur un élément 1 par exemple en forme de panneau. Pour cela, on équipe par exemple l'arête supérieure d'un dispositif de protection 2 selon l'invention. Ce dispositif se compose d'un support 3 et de pointes 4.

La forme de ce dispositif apparaît mieux à la figure 2. Ainsi, le dispositif se compose d'un support 2 en forme de cornière dont l'arête est munie d'une rainure 5 en forme de T renversé qui reçoit des pointes 6 en forme d'aiguilles ou de clous dont la tête 7 est logée dans la rainure 5. Ce dispositif se fixe par exemple par vissage, cloutage, collage ou autre sur l'élément à protéger.

Ce dispositif peut être réalisé à une longueur de fabrication par exemple une longueur d'un ou deux mètres. Ce support est alors coupé à la longueur nécessaire pour équiper l'élément à protéger.

Selon les figures 2, 3, 4, le support peut avoir une section quelconque, par exemple une section de cornière ou une section arrondie (figure 5).

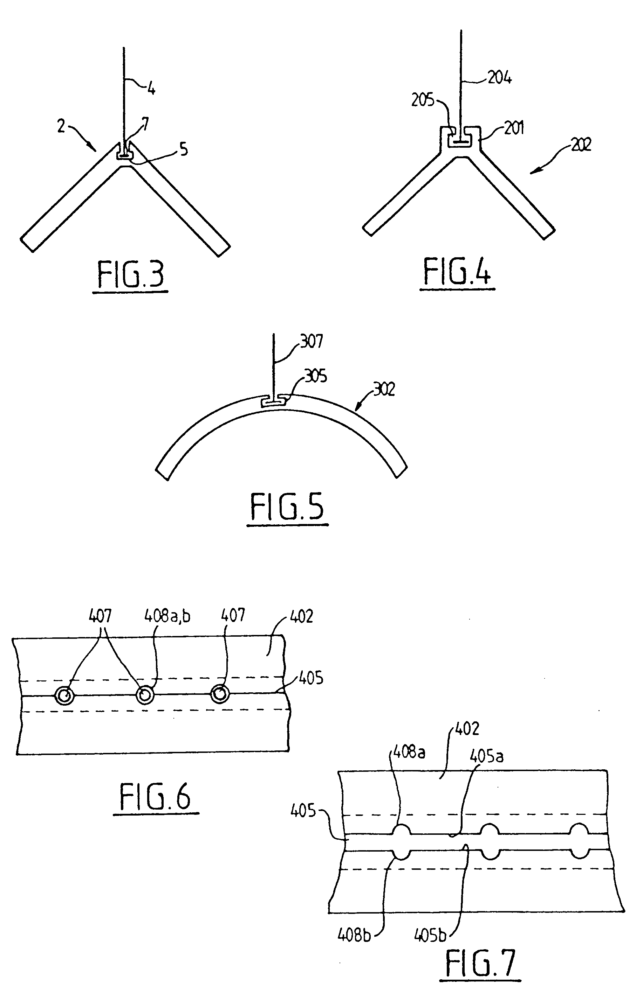

Selon la figure 4, le dispositif de protection est constitué d'un support 202 en forme de cornière dont l'arête est munie d'une réhausse 201 munie de la rainure 205 qui reçoit les pointes 204. Dans le cas de l'exemple de la figure 5, le support 302 est de forme courbe pour s'adapter par exemple à un élément tubulaire à protéger. Ce support comporte une rainure 305 recevant les pointes 307.

Les figures 6 et 7 montrent un mode de réalisation d'un dispositif de protection par exemple à support en forme de baguette. Ce support 402 est muni d'une rainure 405 dont les bords 405a, 405b se touchent et comportent des empreintes 408 pour positionner les aiguilles 407.

La figure 7 montre cette lamelle formant le support 402 en position d'ouverture, c'est-à-dire avec les bords 405a, 405b écartés pour permettre d'y glisser plus facilement les pointes 407.

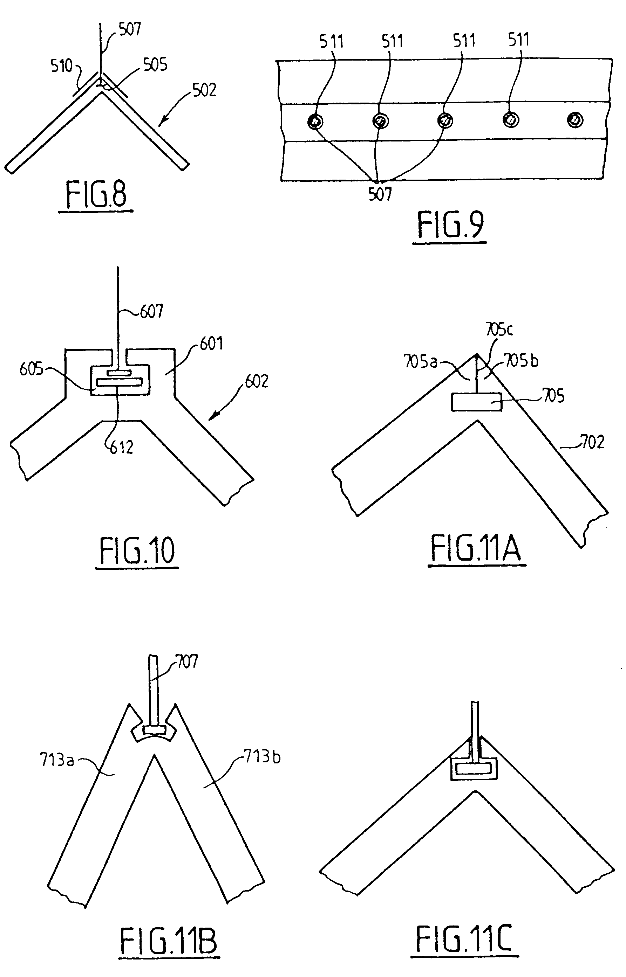

Les figures 8 et 9 montrant, coupée en vue de dessus, une autre forme de réalisation. Dans ce cas, le support 502 en forme de cornière comporte une rainure 505 recevant les pointes 507, l'ensemble étant coiffé par un organe d'écartement 510 par exemple, également en forme de cornière, muni de trous 511 qui définissent l'écartement des pointes 507.

Dans la variante de la figure 10, qui correspond pour la forme du support 602 au support 202 de la figure 4 avec la réhausse 601, les pointes 607 sont logées dans la rainure 605 en étant portées par une bande 612. Les pointes 607 peuvent par exemple être collées sur cette bande 612 et l'ensemble se glisse alors dans la rainure 605.

Les figures 11A, 11B, 11C montrent une autre variante de l'invention analogue à celle des figures 6 et 7 mais dans le cas d'un support 702 en forme de cornière. Selon la figure 11A, ce support comporte une rainure 705 au niveau de l'arête. Les bords 705a, 705b de la rainure se rejoignent selon le plan de jonction 505c. Les deux bords 505a, 505b sont appliqués l'un contre l'autre. Ils peuvent comporter des empreintes comme les empreintes 408a,b du mode de réalisation des figures 6 et 7.

Pour introduire plus facilement les pointes 707 et les positionner, on pince les branches 713a, 713b du support 702 (flèches C à la figure 11B) pour écarter les bords 705a, 705b et faciliter la mise en place des pointes 707. Lorsqu'on relâche les branches 713a, 713b, celles-ci prennent la position représentée à la figure 11C dans laquelle elles coincent ou bloquent les pointes 707.

Il est également possible selon une autre variante non représentée, de bloquer les pointes dans la rainure par des points de colle ou encore en les soudant ou en garnissant la rainure d'une matière souple éventuellement durcissable comme par exemple un mastic.

Les dispositifs de protection selon l'invention peuvent être réalisés en différents matériaux identiques ou non. Ainsi, les supports peuvent être réalisés par exemple par extrusion ou moulage en matière synthétique, en aluminium ou alliage léger. Les pointes peuvent être réalisées de préférence en acier traité ou matière plastique très résistante, etc...

Il convient également de remarquer que les pointes telles que décrites ci-dessus ne constituent pas nécessairement des éléments séparés. Il peut également s'agir de structures en forme de peignes ayant une tête venant se loger dans la rainure. Cela correspond alors au mode de réalisation de la figure 10.

## Revendications

1. Dispositif de protection contre les oiseaux, formé d'un support (2, 202, 302, 402, 502, 602, 702) en forme de baguette et muni de pointes (4, 204, 307, 407, 507, 607, 707) se fixant sur les emplacements susceptibles de servir de perchoirs, dispositif caractérisé en ce que :
- le support (2, 202, 302, 402, 502, 602, 702) est munie d'une rainure (5, 205, 305, 405, 505, 605, 705) à section en T renversé, débouchant,
- les pointes (4, 204, 307, 407, 507, 607, 707) sont des aiguilles munies d'une tête (7) qui se positionne dans la rainure (5, 205, 305, 405, 505, 605, 705).

2. Dispositif de protection selon la revendication 1, caractérisé en ce que le support est en forme de cornière et la rainure est au sommet de la cornière.

3. Dispositif selon l'une quelconque des revendications 1 et 2, caractérisé en ce qu'il comporte un organe d'écartement et de maintien, en forme de cornière, muni d'une rangée de trous à l'écartement et aux dimensions de la tige des aiguilles et destiné à coiffer le support après la mise en place des aiguilles dans la rainure, cet organe d'écartement se fixant sur la cornière devant la rainure.

4. Dispositif selon la revendication 1, caractérisé en ce que les bords de la rainure comportent des empreintes de positionnement dont l'écartement et la forme correspondent à la position prévue pour les aiguilles et à la section des aiguilles.

## Claims

1. Device for protection against birds, formed by a rod-shaped support (2, 202, 302, 402, 502, 602, 702) provided with points (4, 204, 307, 407, 507, 607, 707) secured on locations liable to serve as perches, the device being characterised in that the support (2, 202, 302, 402, 502, 602, 702) is provided with an open groove (5, 205, 305, 405, 505, 605, 705) with a cross-section in the form of an inverted T; and the points (4, 204, 307, 407, 507, 607, 707) are spikes provided with heads (7) which are positioned in the groove (5, 205, 305, 405, 505, 605, 705).

2. Protective device according to Claim 1, characterised in that the support is in the form of an angle part and a groove is at the top of the angle part.

3. Device according to either of Claims 1 and 2, characterised in that it comprises a spacer and holding member, in the form of an angle part, provided with a row of holes at a spacing and having the dimensions of the stems of the spikes and intended to cover the support when the spikes have been positioned in the groove, this spacer member being secured to the angle part in front of the groove.

4. Device according to Claim 1, characterised in that the edges of the groove comprise positioning recesses of which the spacing and shape correspond to the position provided for the spikes and to the cross-section of the needles.

## Patentansprüche

1. Vogelschutzvorrichtung, die aus einem Träger (2, 202, 302, 402, 502, 602, 702) in Form einer Leiste gebildet und mit Zinken (4, 204, 307, 407, 507, 607, 707) versehen ist, zum Befestigen an Stellen, die geeignet sind, als Vogelsitz zu dienen, wobei die Vorrichtung dadurch gekennzeichnet ist, daß
- der Träger (2, 202, 302, 402, 502, 602, 702) mit einer offenen Rille (5, 205, 305, 405, 505, 605, 705) versehen ist, die im Querschnitt ein umgekehrtes großes T ist,
- die Zinken (4, 204, 307, 407, 507, 607, 707) Nadeln sind, die mit einem Kopf (7), der in der Rille (5, 205, 305, 405, 505, 605, 705) positioniert ist, versehen sind.

2. Schutzvorrichtung nach Anspruch 1, dadurch gekennzeichnet, daß der Träger die Form eines Winkelprofils hat und die Rille in der Kante des Winkelprofils liegt.

3. Vorrichtung nach einem der Ansprüche 1 und 2, dadurch gekennzeichnet, daß diese ein Abstands- und Halteelement in Gestalt eines Winkelprofils aufweist, welches mit einer Reihe von Löchern in einem Abstand und in Abmessungen des Schaftes der Nägel versehen sind und welches zum Aufnehmen des Trägers nach dem Plazieren der Nadeln in der Rille bestimmt ist, wobei dieses Abstandselement auf dem Winkelprofil vor der Rille befestigt ist.

4. Vorrichtung nach Anspruch 1, dadurch gekennzeichnet, daß die Ränder der Rille Positioniereindrücke aufweisen, deren Beabstandung und Form der vorgesehenen Position für die Nadeln und dem Querschnitt der Nadeln entspricht.
